# EUROPEAN PATENT SPECIFICATION

(11) **EP 2 500 363 B1**
(45) Date of publication and mention of the grant of the patent: **02.07.2014**
(21) Application number: 12159864.3
(22) Date of filing: 16.03.2012
(51) Int. Cl.: C08F 2/00, C08F 2/01

(54) **Process for Producing Polymer Composition**
Verfahren zur Herstellung einer Polymerzusammensetzung
Procédé de production d'une composition polymère

(30) Priority: 17.03.2011 JP 2011059480
(43) Date of publication of application: 19.09.2012
(73) Proprietor: Sumitomo Chemical Company, Limited, Tokyo 104-8260 (JP)
(72) Inventor: Sumida, Masakazu, Niihama-shi, Ehime 792-8521 (JP); Yamazaki, Kazuhiro, Niihama-shi, Ehime 792-8521 (JP); Sato, Yoshinori, Niihama-shi, Ehime 792-8521 (JP); Wake, Takao, Niihama-shi, Ehime 792-8521 (JP)
(74) Representative: Vossius & Partner

(56) References cited:
- EP-A1- 1 642 638
- EP-A1- 1 655 309
- EP-A1- 2 450 101
- WO-A1-2006/009945
- WO-A1-2010/004977
- US-B1- 6 346 590

## Description

The present invention relates to a process for producing a polymer composition, more specifically, relates to a process for producing a polymer composition by continuous polymerization.

Resin compositions such as methacrylic ester polymers are produced by continuous polymerization in which a raw material polymer, a polymerization initiator and the like are continuously supplied to a reactor to be polymerized. As such continuous polymerization processes, there are known a continuous solution polymerization process using a solvent (or a dispersion medium, which also applies hereinafter) to conduct continuous polymerization, and a continuous bulk polymerization process using no solvent to conduct continuous polymerization.

In general, a continuous solution polymerization process is not efficient since use of a solvent causes a low productivity. In contrast, a continuous bulk polymerization process has an advantage of being able to produce a polymer composition efficiently since the polymerization is conducted without using a solvent. Practically, the continuous bulk polymerization, however, has various problems compared with the continuous solution polymerization, such as that reaction control is difficult due to high viscosity of the reaction mixture, and when an inner surface of a reactor is cooled to remove heat from a reaction system, this degrades quality of a polymer composition and thus of a resin composition obtained therefrom. Then, a process is proposed which uses a reactor of a complete mixing type, fully fills the reactor with liquid to exclude a gas phase part therefrom, and conducts continuous bulk polymerization under an adiabatic condition with no heat transfer to or from the outside (JP 07-126308 A). Further, in order to assure such adiabatic condition, a continuous bulk polymerization apparatus is proposed which controls the supply amount of a raw material monomer and the supply amount of a polymerization initiator so as to make the temperature in the reactor equal to the setting temperature of an outer surface of the reactor (JP 2006-104282 A).

In recent years, applications of resin compositions such as methacrylic ester polymers has been expanded. Furthermore, the demand is increasing for more efficiently producing a polymer composition of high quality (for example, a polymer composition having superior properties such as heat resistance and heat stability, and less immixed with impurities). However, it has been proved that conventional processes for producing a polymer composition (JP 07-126308 A and JP 2006-104282 A) are not always sufficient to meet the demand.

The purpose of the present invention is to provide a process for producing a polymer composition, which process is able to more efficiently produce the polymer composition with high quality.

The inventors considered using at least two reactors of a complete mixing type in combination to conduct continuous polymerization. As to a continuous solution polymerization process, apparatuses having two stages of reactors are known, such as that the most part of polymerization is conducted in the former reactor and the polymerization is completed in the latter reactor while removing a polymerization initiator therefrom (JP 01-172401 A); and that polymerization is conducted to some extent in the former reactor and a solvent is added to the latter reactor to conduct polymerization (JP 05-331212 A). In processes using such apparatuses, however, removal of heat from a reaction system is conducted by reflux cooling (a raw material monomer or the like in the reactor is taken out of the reactor via evaporation, and it is returned to the reactor again after having been subjected to cold condensation). This brings about local or rapid cooling of the reaction system, which causes a gel to adhere to and grow on the inner surface of the reactor. Especially in a case of conducting the polymerization in a reduced amount of solvent or with a high polymerization ratio in order to increase the productivity, the viscosity of the mixture in the reaction system becomes high. This makes the local or rapid cooling of the reaction system arise more easily, which makes the adhering and growing of the gel on the inner surface of the reactor prominent. As a result, there is a problem such as that gelled substance is mixed into a resultant polymer composition as impurity. The inventors have investigated about a novel process for producing a polymer composition which is able to more efficiently produce the polymer composition with high quality, and finally completed the present invention.

Document EP 2 450 101 discloses a continuous process in which two complete-mixing type polymerisation reactors which can be adiabatic are used, each one having effluent ports located at the top, and in which the residence time can be equal. The polymerisation can be a bulk polymerisation and the reactors can be fully filled.

Document WO 2006/009945 discloses a process which is similar to the present process. However claim 1 differs at least in that the reactors are completely mixed and fully filled, and in that the effluent ports are located at the top of the reactors. In addition several selections are necessary to arrive at the combination of temperature ranges of claim 1, which are therefore also not directly and unambiguously disclosed.

Document US 6 346 590 discloses a process which differs from the present process at least in that no adiabatic reactor is mentioned and in the fact that the effluent ports are not said to be located at the top of the reactors. Moreover this document does not disclose temperatures in the ranges of claim 1 and does not disclose any concrete example with the use of two reactors.

Document WO 2010/004977 discloses a similar process as the present process but fails to disclose at least the adiabatic and the fully filled features, as well as temperatures in the range of claim 1.

Document EP2557093 discloses a similar process as the present application with a suitable combination of temperature ranges, but fails to disclose the adiabatic and the fully filled features.

The present invention provides the following [1] to [4].
[1] A process for producing a polymer composition, which comprises
   a first polymerization step of supplying a raw material monomer and a polymerization initiator to a first reactor of a complete mixing type through its supply port to be subjected to continuous polymerization under an adiabatic condition in the first reactor of the complete mixing type, and taking the resultant intermediate composition from an effluent port located at the top of the first reactor of the complete mixing type; and
   a second polymerization step of supplying the intermediate composition to a second reactor of a complete mixing type through its supply port to be further subjected to continuous polymerization under an adiabatic condition in the second reactor of the complete mixing type, and taking the resultant polymer composition from an effluent port located at the top of the second reactor of the complete mixing type;
   wherein the first polymerization step is conducted at a temperature from 125 to 170 °C, and the second polymerization step is conducted at a temperature from 130 to 180 °C, wherein in the first polymerization step and in the second polymerization step, the continuous polymerization is conducted under a fully filled condition.
[2] The process for producing the polymer composition according to the above [1], wherein the ratio of the average residence time in the second reactor of the complete mixing type to the average residence time in the first reactor of the complete mixing type is from 9/1 to 1/9.
[3] The process for producing the polymer composition according to the above [1] or [2], wherein the continuous polymerization in the first polymerization step and the second polymerization step is continuous bulk polymerization.

According to the present invention, there is provided a novel process for producing a polymer composition which is able to more efficiently produce the polymer composition with high quality, more specifically, a polymer composition having high heat stability.

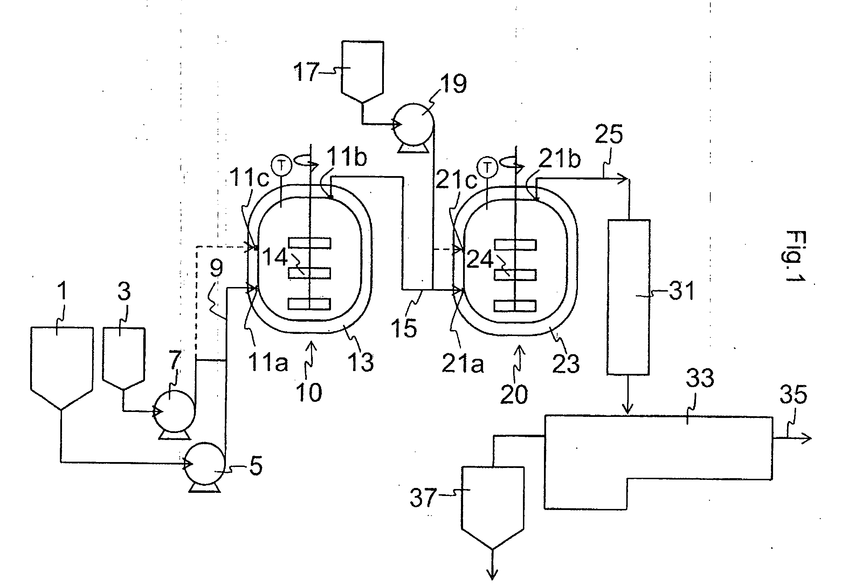

Fig. 1 shows a schematic view for explaining a process for producing a polymer composition in one embodiment of the present invention.

The following reference signs denote the following elements:
1 raw material monomer tank (supply source of raw material monomer)
3polymerization initiator tank (supply source of polymerization initiator and, if necessary, of raw material monomer)
5 pump
7 pump
9raw material supply line
10 first reactor
11a supply port
11b effluent port
11c another supply port
13 jacket (temperature regulating means)
14 stirrer
15 connection line
17polymerization initiator tank (supply source of additional polymerization initiator and, if necessary, of raw material monomer)
19 pump
20 second reactor
21a supply port
21b effluent port
21c another supply port
23 jacket (temperature regulating means)
24 stirrer
25 effluent line
31 preheater
33 devolatilizing extruder
35 discharge line
37 recovery tank
T temperature sensor (temperature detecting means)

The process for producing a polymer composition of the present invention is conducted by using at least two reactors of a complete mixing type, and continuous polymerization such as any of continuous bulk polymerization and continuous solution polymerization is conducted in each of the reactors. A process for producing a polymer composition of the present invention will be understood as a process for conducting continuous bulk polymerization when continuous bulk polymerization is conducted in all of the reactors, and understood as a process for conducting continuous solution polymerization when continuous solution polymerization is conducted in all of the reactors. However, a process for producing a polymer composition of the present invention is not limited thereto, but may be those wherein continuous bulk polymerization is conducted in one reactor (e.g. at least one former reactor) and continuous solution polymerization is conducted in another reactor (e.g. at least one latter reactor).

Hereinafter, one embodiment of the present invention will be described in detail with reference to Fig. 1.

First of all, a continuous polymerization apparatus used to conduct a process for producing a polymer composition in this embodiment is explained. The process for producing a polymer composition in this embodiment is conducted by using at least the first reactor 10 and the second reactor 20. These reactors 10 and 20 are both reactors of a complete mixing type, and used to conduct continuous bulk polymerization as continuous polymerization at the first polymerization step and the second polymerization step in this embodiment.

More specifically, the first reactor 10 is provided with a supply port 11a and an effluent port 11b, and preferably further provided with a jacket 13 as a temperature regulating means for regulating the temperature of an outer surface of the reactor and a stirrer 14 for stirring a content therein. Similarly, the second reactor 20 is provided with a supply port 21a and an effluent port 21b, and preferably further provided with a jacket 23 surrounding an outer surface of the reactor as a temperature regulating means for regulating the temperature of the outer surface of the reactor and a stirrer 24 for stirring a content therein. The effluent ports 11b and 21b are located at a top of each of the reactors. On the other hand, the supply ports 11a and 21a may be generally located at an appropriate position of a lower part of each of the reactors, although this embodiment is not limited thereto. Each of these reactors 10 and 20 may be provided with a temperature sensor T as a temperature detecting means for detecting the temperature in the reactor.

The first reactor 10 and the second reactor 20 may have the same or a different inner volume. Making the inner volume of the first reactor and the inner volume of the second reactor different from each other, it is possible to effectively differentiate between the first reactor 10 and the second reactor 20 in an average residence time.

The stirrers 14 and 24 are a member for substantially attaining a complete mixing condition in the reactors. These stirrers may have any appropriate stirring blade(s), for example, may have blades of MIG impeller, MAXBLEND impeller (registered trademark, manufactured by Sumitomo Heavy Industries, Ltd.), paddle impeller, double helical ribbon impeller, and FULLZONE impeller (registered trademark, manufactured by Kobelco Eco-Solutions Co., Ltd.). In order to increase the stirring effect in the reactor, it is preferable to provide the reactor with a baffle(s). However, this embodiment is not limited thereto, but may have any appropriate configuration in place of the stirrers 14 and 24 as long as a complete mixing condition can be substantially attained in the reactors.

In general, the reactors 10 and 20 are more preferable when they have a higher stirring efficiency. However, in order to avoid an unnecessary amount of heat being added to the reactors by the stirring operation, it is preferable that the power of stirring is not more than necessary. The power of stirring is not specifically limited, but preferably 0.5 to 20 kW/m³, and more preferably 1 to 15 kW/m³. As the viscosity of the reaction system becomes higher (or the content ratio of a polymer in the reaction system becomes higher), it is preferable to set the power of stirring at a higher level.

As shown in the exemplary embodiment of the drawing, the supply port 11a of the first reactor 10 is connected through a raw material supply line 9 to a raw material monomer tank (a supply source of a raw material monomer) 1 and a polymerization initiator tank (a supply source of a polymerization initiator and, if necessary, of a raw material monomer) 3 via pumps 5 and 7, respectively. In this embodiment, the supply source of the raw material monomer and the polymerization initiator is the raw material monomer tank 1 and the polymerization initiator tank 3, but the number of the supply sources of the raw material monomer and the polymerization initiator, the forms of the raw material monomer and the polymerization initiator (in a case of a mixture, for example, a composition thereof) and so on are not particularly limited as long as the raw material monomer and the polymerization initiator can be supplied to the first reactor 10, appropriately. Although it is not necessary for this embodiment, another supply port 11c may be provided to the first reactor 10 and this supply port 11c may be connected to the polymerization initiator tank 3 via the pump 7 as shown by a dotted line in Fig. 1. The effluent port 11b of the first reactor 10 is connected to the supply port 21a of the second reactor 20 through a connection line 15. The effluent port 21b of the second reactor 20 is linked up to an effluent line 25. Thus, the first reactor 10 and the second reactor 20 are connected in series. There is preferably no pump on the connection line 15 between the effluent port 11b of the first reactor 10 and the supply port 21a of the second reactor 20.

It is not necessary for this embodiment, but the second reactor 20 may be connected to a polymerization initiator tank (a supply source of an additional polymerization initiator and, if necessary, of a raw material monomer) 17 via a pump 19. In this embodiment, the supply source of the additional polymerization initiator is the polymerization initiator tank 17, but the number of supply sources of the additional polymerization initiator, the form of the polymerization initiator (in a case of a mixture, for example, a composition thereof) and so on are not particularly limited as long as the additional polymerization initiator can be supplied to the second reactor 20, appropriately. In a case where the polymerization initiator tank 17 and the pump 19 are present, the supply port 21a of the second reactor 20 may be connected to the polymerization initiator tank 17 via the pump 19 through the connection line 15 as shown by a solid line in Fig. 1, or the second reactor 20 may be provided with another supply port 21c so that this supply port 21c is connected to the polymerization initiator tank 17 via the pump 19 as shown by, for example, a dotted line in Fig. 1.

The pumps 5 and 7 and, if present, the pump 19 are not particularly limited. They are preferably pumps which are able to set flow rates from the raw material monomer tank 1 and the polymerization initiator tank 3 and a flow rate from the polymerization initiator tank 17, if present, at constant values. More specifically, multiple reciprocating pumps are preferred, and more preferred are pulsation-free controlled-volume pumps such as a duplicate pulsation-free controlled-volume pump and a triplex pulsation-free controlled-volume pump. By using these, it is possible to control a supply amount (or a supply flow rate, which also applies hereinafter) of the raw material monomer and the polymerization initiator to the first reactor 10 and, if necessary, an additional supply amount of the polymerization initiator (or the raw material monomer and the polymerization initiator) to the second reactor 20.

Further, it is not necessary for this embodiment, but the connection line 15 for connecting the effluent port 11b of the first reactor 10 to the supply port 21a of the second reactor 20 is preferably provided with a jacket or the like (not shown in the drawing) surrounding an outer surface of the connection line 15, as a temperature regulating means for controlling the temperature of the connection line 15. Thereby, it is possible to control the temperature of the connection line 15 (more specifically, a temperature of the outer surface of the connection line, and thus a temperature in the connection line) so that this temperature is substantially the same temperature as the temperature in the first reactor 10. In a case where the first reactor 10 is provided with the temperature sensor T as a temperature detecting means for detecting the temperature in the first reactor 10 as in this embodiment, the temperature regulating means of the connection line 15 can be controlled so that the temperature of the connection line 15 is substantially the same temperature as the temperature in the first reactor 10 detected by this temperature sensor T.

It is preferable that each of the members described in the above with reference to Fig. 1 is appropriately connected to a control unit (not shown in the drawing) so as to enable the control unit to control their operations. Thereby, in order to make the temperature of the outer surface of the reactor set for each of the jackets (temperature regulating means) 13 and 23 correspond to the temperature in the reactor detected by the temperature sensor (temperature detecting means) T with respect to each of the first reactor 10 and the second reactor 20, the apparatus is controllable by adjusting the supply amounts of the raw material monomer and the polymerization initiator to the first reactor 10 with the operation of the pumps 5 and 7 or by regulating the temperature of the outer surface of the reactor set for the jackets 13 and 23. Also, in a case where the polymerization initiator tank 17 and the pump 19 are present, the apparatus is controllable by adjusting the additional supply amount of the polymerization initiator (or the raw material monomer and the polymerization initiator) to the second reactor 20 with the operation of the pump 19. Further, in order to make the temperature in the connection line 15 substantially equal to the temperature in the first reactor 10 detected by the temperature sensor (temperature detecting means) T, the apparatus is controllable by adjusting the temperature of the outer surface of the connection line 15 set for the jacket (temperature regulating means, not shown in the drawing) surrounding the connection line 15. It is preferable that the temperature in the connection line 15 is actually measured by the temperature detecting means for detecting the connection line 15. However, in some cases depending on the polymerization reaction conditions in the first reactor 10, due to some causes such as that all of the supplied polymerization initiator is spent, an intermediate composition (hereinafter described) taken from the effluent port 11b does not let the polymerization reaction proceed in the connection line 15, that is, no heat of the polymerization reaction is generated in the connection line 15. In such case, the temperature of the jacket surrounding the connection line 15 is set at substantially the same temperature as the temperature in the first reactor 10, or the connection line 15 is covered with a lagging in place of the jacket, so that the temperature in the connection line 15 can become substantially the same temperature as the temperature in the first reactor 10, and considering the temperature in the connection line 15 as substantially the same temperature as the temperature of the jacket surrounding the connection line 15 is allowable.

The jackets 13 and 23 surround almost the whole of the reactors 10 and 20, respectively to appropriately heat or retain the heat of the reactors 10 and 20 by introducing steam, hot water, or an organic heat medium from a heat medium supply route (not shown in the drawing). The temperature of the jackets 13 and 23 can be appropriately regulated with a temperature or pressure of the heat medium to be introduced. The heat medium introduced into the jackets 13 and 23 can be removed from a heat medium discharge route (not shown in the drawing). The temperature and/or pressure of the jackets 13 and 23 are detected by a sensor such as a temperature sensor (not shown in the drawing) located on the heat medium discharge route. The point of location of a sensor such as the temperature sensor is not particularly limited, but it may be located, for example, on the heat medium supply route, or in the jackets 13 and 23. When the connection line 15 is provided with the jacket, the jacket of the connection line 15 may have a similar structure to these jackets 13 and 23.

For the polymerization reaction in the reactors 10 and 20, it is beneficial to proceed at a generally constant temperature in each of the reactors 10 and 20 in view of obtaining a polymer with a constant quality. Therefore, the above described temperature regulating means (jackets 13 and 23) is preferably controlled at a constant temperature which has been set beforehand, so that the temperature inside the reactors 10 and 20 can be maintained respectively at a generally constant temperature.

The setting temperature of the above described temperature regulating means (jackets 13 and 23) can be transmitted to a supply flow rate control means, as hereinafter described, to be used as data for determining whether control of the supply flow rate with the monomer supply means (pump 5) and/or the initiator supply means (pump 7 and, if present, pump 19) is necessary or not. The setting temperature of the above described temperature regulating means (jackets 13 and 23) can be regulated by controlling the temperature or pressure of the above described heat medium.

As to the supply flow rate control means, an example thereof is a control unit (not shown in the drawing) provided with CPU, ROM, and RAM.

The ROM of the control unit is a device for storing a program which controls the pumps 5 and 7 and, if present, the pump 19. The RAM of the control unit is a device for temporary storing data of the temperatures in the reactors 10 and 20 detected by the temperature sensor T, data of the setting temperatures of the jackets 13 and 23, data of, if present, the setting temperature of the jacket of the connection line 15, in order to execute the above program.

The CPU of the control unit executes the program stored in the ROM based on data such as the data of the temperatures in the reactors 10 and 20 and the data of the setting temperatures of the jackets 13 and 23 stored in the above RAM so that the supply flow rates of the raw material monomer and/or the polymerization initiator to the reactors 10 and 20 is controlled by the monomer supply means (pump 5) and/or the initiator supply means (pump 7 and, if present, pump 19). In a case where the connection line 15 is provided with the jacket as the temperature regulating means, the CPU of the control unit executes the program stored in the ROM (which may be either a part of the above program or other program than the above program) based on data such as the data of the temperatures in the reactors 10 and 20 and the data of the setting temperature of the jacket (not shown in the drawing) of the connection line 15 stored in the above RAM so that the setting temperature of the jacket of the connection line 15 can be controlled.

An example of the control by the supply flow rate control means (control unit) will be described below.

When the temperature in the reactor 10 detected by the temperature sensor T exceeds the setting temperature of the jacket 13 as the temperature regulating means, the CPU executes the program in the ROM to control, for example, the pump 7 so as to decrease the supply flow rate of the polymerization initiator into the reactor 10. In a case where the polymerization initiator tank 17 and the pump 19 are present, when the temperature in the reactor 20 detected by the temperature sensor T exceeds the setting temperature of the jacket 23 as the temperature regulating means while the pump 19 supplies the polymerization initiator to the reactor 20 to conduct the polymerization, the CPU executes the program in the ROM to control, for example, the pump 19 so as to decrease the supply flow rate of the polymerization initiator into the reactor 20. By conducting such control, polymerization heat generated in the reactors 10 and/or 20 can be decreased, and thereby the temperatures in the reactors 10 and/or 20 can be lowered.

On the other hand, when the temperature in the reactor 10 is below the setting temperature of the jacket 13, the CPU executes the program in the ROM to control, for example, the pump 7 so as to increase the supply flow rate of the polymerization initiator into the reactor 10. In a case where the polymerization initiator tank 17 and the pump 19 are present, when the temperature in the reactor 20 is below the setting temperature of the jacket 23 while the pump 19 supplies the polymerization initiator to the reactor 20 to conduct the polymerization, the CPU executes the program in the ROM to control, for example, the pump 19 so as to increase the supply flow rate of the polymerization initiator into the reactor 20. By conducting such control, polymerization heat generated in the reactors 10 and/or 20 can be increased, and thereby the temperatures in the reactors 10 and/or 20 can be raised.

For example, when the control over the pump 7 and, if present, the pump 19 for the polymerization reaction in the reactors 10 and 20 results in remarkable decrease in the total supply flow rate into the reactors 10 and 20, it is preferable to not only control the pump 7 and, if present, the pump 19 so as to decrease the supply flow rate of the polymerization initiator, but also to control the pump 5 so as to increase the supply flow rate of the raw material monomer at the same time.

Further, as another method for the control, the following example is provided. That is, when the temperature in the reactor 10 detected by the temperature sensor T exceeds the setting temperature of the jacket 13 as the temperature regulating means, the pump 5 is controlled to increase the supply flow rate of the raw material monomer, so that the relative supply flow rate of the polymerization initiator into the reactor 10 is decreased. By conducting such control, the temperature in the reactor 10 can also be reduced.

The ratio of the supply flow rate of the raw material monomer and the supply flow rate of the polymerization initiator can be appropriately set depending on the kind of the polymer generated, the kind of the polymerization initiator used, and so on.

Also, the degree of increase or decrease in the supply flow rate of the raw material monomer and/or the supply flow rate of the polymerization initiator can be appropriately set depending on the kind of the polymer generated, the kind of the polymerization initiator used, and so on. However, if not only the polymerization initiator, but the raw material monomer comprising the polymerization initiator is supplied to the reactors 10 and 20 by the initiator supply means, it is necessary to consider a content ratio of the polymerization initiator in the raw material monomer comprising polymerization initiator to control the supply flow rare of the polymerization initiator.

Further, as still another example of the control, the following control method is explained for a case where the connection line 15 is provided with the jacket as the temperature regulating means. That is, when the temperature in the reactor 10 detected by the temperature sensor T is different from the temperature in the connection line 15 (conveniently, the setting temperature of the jacket of the connection line 15) by a degree more than, for example, ± 5 °C, the setting temperature of the jacket of the connection line 15 can be regulated so that the temperature in the connection line 15 (conveniently, the setting temperature of the jacket of the connection line 15) becomes substantially the same temperature as the temperature of the reactor 10.

Additionally, although not necessary for this embodiment, a preheater 31 and a devolatilizing extruder 33 may be located downstream of the effluent line 25. There may be a pressure adjusting valve (not shown in the drawing) provided between the preheater 31 and the devolatilizing extruder 33. An extruded object after devolatilization is discharged from a discharge line 35.

As the preheater 31, any appropriate heater can be used as long as it is able to heat a viscous fluid. As the devolatilizing extruder 33, a single or multi screw devolatilizing extruder can be used.

Further, there may be a recovery tank 37 for storing the raw material monomer which is separated and recovered from a volatile component (comprising unreacted raw material, mainly) separated with the devolatilizing extruder 33.

Next, a process for producing a polymer composition conducted in accordance with the present invention, in particular by using such an apparatus, will be described. In this embodiment, a case of conducting continuous polymerization of a methacrylic ester monomer, in other words, a case of producing a methacrylic ester polymer will be described as an example, although the present invention is not limited thereto.

### • Preparation

At first, the raw material monomer, the polymerization initiator and so on are prepared.

As the raw material monomer, a methacrylic ester monomer is used in this embodiment.

Examples of the methacrylic ester monomer are
- alkyl methacrylate (of which alkyl group has 1 to 4 carbons) alone, or
- a mixture of not less than 80% by weight of alkyl methacrylate (of which alkyl group has 1 to 4 carbons) and not more than 20% by weight of other vinyl monomer copolymerizable therewith.

Examples of alkyl methacrylate (of which alkyl group has 1 to 4 carbons) include methyl methacrylate, ethyl methacrylate, n-propyl methacrylate, isopropyl methacrylate, n-butyl methacrylate, t-butyl methacrylate, sec-butyl methacrylate, and isobutyl methacrylate. Among them, methyl methacrylate is preferred. The above described examples of alkyl methacrylate may be used alone or in combination of at least two of them.

Examples of copolymerizable vinyl monomer include monofunctional monomers having one double bond which is radical-polymerizable and multifunctional monomers having two or more double bonds which are radical-polymerizable. More specifically, the monofunctional monomers having one double bond which is radical-polymerizable include, for example, methacrylic esters such as benzyl methacrylate and 2-ethylhexyl methacrylate (except for the above described alkyl methacrylate (of which alkyl group has 1 to 4 carbons)); acrylic esters such as methyl acrylate, ethyl acrylate, propyl acrylate, butyl acrylate, and 2-ethylhexyl acrylate; unsaturated carboxylic acids or acid anhydrides thereof such as acrylic acid, methacrylic acid, maleic acid, itaconic acid, maleic acid anhydride, and itaconic acid anhydride; hydroxy group-containing monomers such as 2-hydroxyethyl acrylate, 2-hydroxypropyl acrylate, monoglycerol acrylate, 2-hydroxyethyl methacrylate, 2-hydroxypropyl methacrylate, and monoglycerol methacrylate; nitrogen-containing monomers such as acrylamide, methacrylamide, acrylonitrile, methacrylonitrile, diacetoneacrylamide, and dimethylaminoethyl methacrylate; epoxy group-containing monomers such as allyl glycidyl ether, glycidyl acrylate, and glycidyl methacrylate; styrene based monomers such as styrene and α-methylstyrene. The multifunctional monomers having two or more double bonds which are radical-polymerizable include, for example, diesters of unsaturated carboxylic acids and glycols such as ethylene glycol dimethacrylate, and butane diol dimethacrylate; unsaturated carboxylic acid alkenyl esters such as allyl acrylate, allyl methacrylate, and allyl cinnamate; polybasic acid polyalkenyl esters such as diallyl phthalate, diallyl maleate, triallyl cyanurate, and triallyl isocyanurate; esters of unsaturated carboxylic acid and polyalcohol such as trimethylolpropane triacrylate; and divinylbenzene. The above described examples of copolymerizable vinyl monomer may be used alone or in combination of at least two of them.

As the polymerization initiator, for example, a radical initiator is used in this embodiment.

Examples of a radical initiator include azo compounds such as azobisisobutyronitrile, azobisdimethylvaleronitrile, azobiscyclohexanenitrile, 1,1'-azobis(1-acetoxy-1-phenylethane), dimethyl 2,2'-azobisisobutylate, and 4,4'-azobis-4-cyanovaleric acid; organic peroxides such as benzoyl peroxide, lauroyl peroxide, acetyl peroxide, caprylyl peroxide, 2,4-dichlorobenzoyl peroxide, isobutyl peroxide, acetyl cyclohexylsulfonyl peroxide, t-butyl peroxypivalate, t-butyl peroxyneodecanoate, t-butyl peroxyneoheptanoate, t-butyl peroxy-2-ethylhexanoate, 1,1-di(t-butylperoxy)cyclohexane, 1,1-di(t-butylperoxy)-3,3,5-trimethylcyclohexane, 1,1-di(t-hexylperoxy)-3,3,5-trimethylcyclohexane, isopropyl peroxydicarbonate, isobutyl peroxydicarbonate, s-butyl peroxydicarbonate, n-butyl peroxydicarbonate, 2-ethylhexyl peroxydicarbonate, bis(4-t-butylcyclohexyl) peroxydicarbonate, t-amyl peroxy-2-ethylhexanoate, 1,1,3,3-tetramethyl butyl peroxyethylhexanoate, 1,1,2-trimethyl propyl peroxy-2-ethylhexanoate, t-butyl peroxy isopropyl monocarbonate, t-amyl peroxy isopropyl monocarbonate, t-butyl peroxy-2-ethylhexyl carbonate, t-butyl peroxy allyl carbonate, t-butyl peroxy isopropyl carbonate, 1,1,3,3-tetramethyl butyl peroxy isopropyl monocarbonate, 1,1,2-trimethyl propyl peroxy isopropyl monocarbonate, 1,1,3,3-tetramethyl butyl peroxy isononate, 1,1,2-trimethyl propyl peroxy-isononate, and t-butyl peroxybenzoate.

These polymerization initiators may be used alone or in combination of at least two of them.

The polymerization initiator is selected according to the kinds of the polymer generated and the raw material monomer used. For example, while the present invention is not particularly limited, those of radical polymerization initiator having a half-life not more than one minute at the polymerization temperature are preferable. When the half-life at the polymerization temperature is at most one minute, the reaction rate is suitable, thus the initiator is suitable for the polymerization reaction in the continuous polymerization apparatus.

The supply amount of the polymerization initiator (radical initiator) is not particularly limited, but generally 0.001 to 1% by weight with respect to the raw material monomer (the raw material monomer eventually supplied to the reactor 10). In a case where the polymerization initiator tank 17 and the pump 19 are present in addition to the polymerization initiator tank 3 and the pump 7, the polymerization initiator can be supplied separately into the first reactor 10 and the second reactor 20. When the polymerization initiator tank 17 supplies the mixture of the raw material monomer and the polymerization initiator to the second reactor 20 by the pump 19, the total supply amount of the polymerization initiator supplied to the reactor 10 and the reactor 20 can be adjusted within the above range with respect to the sum of the raw material monomer eventually supplied to the reactor 10 and the raw material monomer additionally supplied to the reactor 20.

In addition to the raw material monomer and the polymerization initiator described above, any appropriate other component(s), for example, a chain transfer agent, a mold release agent, a rubbery polymer such as butadiene and styrene-butadiene rubber (SBR), a heat stabilizing agent, and an ultraviolet absorbing agent may be used. The chain transfer agent can be used for adjusting a molecular weight of the polymer generated. The mold release agent can be used for improving moldability (or processability) of a resin composition obtained from the polymer composition. The heat stabilizing agent can be used for preventing a produced polymer from thermal degradation. The ultraviolet absorbing agent can be used for preventing a produced polymer from being degraded by ultraviolet rays.

As to the chain transfer agent, either monofunctional or polyfunctional chain transfer agent can be used. More specifically, examples thereof include alkyl mercaptans such as n-propyl mercaptan, isopropyl mercaptan, n-butyl mercaptan, t-butyl mercaptan, n-hexyl mercaptan, n-octyl mercaptan, 2-ethylhexyl mercaptan, n-dodecyl mercaptan, and t-dodecyl mercaptan; aromatic mercaptans such as phenyl mercaptan and thiocresol; mercaptans having 18 or less carbons such as ethylene thioglycol; polyalcohols such as ethylene glycol, neopentyl glycol, trimethylolpropane, pentaerythritol, dipentaerythritol, tripentaerythritol, and sorbitol; those of which hydroxyl group is esterified with thioglycolic acid or 3-mercaptopropionic acid, 1,4-dihydronaphthalene, 1,4,5,8-tetrahydronaphthalene, β-terpinene, terpinolene, 1,4-cyclohexadiene, and hydrogen sulfide. These may be used alone or in combination of at least two of them.

The supply amount of the chain transfer agent is not particularly limited since it varies depending on the kind of the chain transfer agent used. For example, in a case of using mercaptans, it is preferably 0.01 to 3% by weight, and more preferably 0.05 to 1% by weight with respect to the raw material monomer (the raw material monomer eventually supplied to the reactor 10).

The mold release agent is not particularly limited. Specifically, esters of higher fatty acids, higher fatty alcohols, higher fatty acids, higher fatty acid amides, metal salts of higher fatty acids are exemplified. As the mold release agent, one or more kinds thereof may be used.

As to the esters of higher fatty acids, more specifically, examples thereof include saturated fatty acid alkyl esters such as methyl laurate, ethyl laurate, propyl laurate, butyl laurate, octyl laurate, methyl palmitate, ethyl palmitate, propyl palmitate, butyl palmitate, octyl palmitate, methyl stearate, ethyl stearate, propyl stearate, butyl stearate, octyl stearate, stearyl stearate, myristyl myristate, methyl behenate, ethyl behenate, propyl behenate, butyl behenate, octyl behenate; unsaturated fatty acid alkyl esters such as methyl oleate, ethyl oleate, propyl oleate, butyl oleate, octyl oleate, methyl linoleate, ethyl linoleate, propyl linoleate, butyl linoleate, octyl linoleate; saturated fatty acid glycerides such as lauric monoglyceride, lauric diglyceride, lauric triglyceride, palmitic monoglyceride, palmitic diglyceride, palmitic triglyceride, stearic monoglyceride, stearic diglyceride, stearic triglyceride, behenic monoglyceride, behenic diglyceride, behenic triglyceride; unsaturated fatty acid glycerides such as oleic monoglyceride, oleic diglyceride, oleic triglyceride, linolic monoglyceride, linolic diglyceride, linolic triglyceride. Among them, methyl stearate, ethyl stearate, butyl stearate, octyl stearate, stearic monoglyceride, stearic diglyceride, and stearic triglyceride are preferred.

As to the higher fatty alcohols, more specifically, examples thereof include saturated fatty (or aliphatic) alcohols such as lauryl alcohol, palmityl alcohol, stearyl alcohol, isostearyl alcohol, behenyl alcohol, myristyl alcohol, cetyl alcohol; unsaturated fatty (or aliphatic) alcohols such as oleyl alcohol, linolyl alcohol. Among them, stearyl alcohol is preferred.

As to the higher fatty acids, more specifically, examples thereof include saturated fatty acids such as caproic acid, caprylic acid, capric acid, lauric acid, myristic acid, palmitic acid, stearic acid, arachidic acid, behenic acid, lignoceric acid, 12-hydroxyoctadecanoic acid; unsaturated fatty acids such as palmitoleic acid, oleic acid, linoleic acid, linolenic acid, cetoleic acid, erucic acid, ricinoleic acid.

As to the higher fatty acid amides, more specifically, examples thereof include saturated fatty acid amides such as lauric acid amide, palmitic acid amide, stearic acid amide, behenic acid amide; unsaturated fatty acid amides such as oleic acid amide, linoleic acid amide, erucic acid amide; amides such as ethylene-bis-lauric acid amide, ethylene-bis-palmitic acid amide, ethylene-bis-stearic acid amide, N-oleyl stearamide. Among them, stearic acid amide and ethylene-bis-stearic acid amide are preferred.

As to the metal salts of higher fatty acids, examples thereof include sodium salts, potassium salts, calcium salts and barium salts of the above-described higher fatty acids.

The amount of the mold release agent which can be used is preferably adjusted in a range from 0.01 to 1.0 part by weight, and more preferably adjusted in a range from 0.01 to 0.50 part by weight, with respect to 100 parts by weight of a polymer contained in a polymer composition to be obtained.

The heat stabilizing agent is not particularly limited. A phosphorous-based heat stabilizing agent and organic disulfide compounds are exemplified as the heat stabilizing agent. Among them, the organic disulfide compounds are preferable. As the heat stabilizing agent, one or more kinds thereof may be used.

As to the phosphorus-based heat stabilizing agent, examples thereof include tris(2,4-di-t-butylphenyl)phosphite, 2-[[2,4,8,10-tetrakis(1,1-dimethylethyl)dibenzo [d,f][1,3,2]dioxaphosphepine-6-yl]oxy]-N,N-bis[2-[[2,4,8,10-tetrakis(1,1-dimethylethyl)dibenzo [d,f][1,3,2]dioxaphosphepine-6-yl]oxy]-ethyl]ethanamine, diphenyl tridecyl phosphite, triphenyl phosphite, 2,2-methylenebis(4,6-di-tert-butylphenyl)octylphosphite, bis(2,6-di-tert-butyl-4-methylphenyl)pentaerythritol diphosphite, and so on. Among them, 2,2-methylenebis(4,6-di-tert-butylphenyl)octylphosphite is preferred.

As to the organic disulfide compounds, examples thereof include dimethyl disulfide, diethyl disulfide, din-propyl disulfide, di-n-butyl disulfide, di-sec-butyl disulfide, di-tert-butyl disulfide, di-tert-amyl disulfide, dicyclohexyl disulfide, di-tert-octyl disulfide, di-n-dodecyl disulfide, and di-tert-dodecyl disulfide. Among them, di-tert-alkyl disulfide is preferred, and di-tert-dodecyl disulfide is more preferred.

The amount of the heat stabilizing agent to be used is preferably 1 to 2,000 ppm by weight with respect to a polymer contained in a polymer composition to be obtained. On molding a polymer composition (more specifically, a resin composition after devolatilization) to prepare a molded article from the polymer composition of the present invention, a molding temperature is set at a higher temperature for the purpose of improving its molding processability in some cases. Use of the heat stabilizing agent is effective for such cases.

As the kinds of the ultraviolet absorbing agent, a benzophenone-based ultraviolet absorbing agent, a cyanoacrylate-based ultraviolet absorbing agent, a benzotriazole-based ultraviolet absorbing agent, a malonic ester-based ultraviolet absorbing agent, an oxalic anilide-based ultraviolet absorbing agent and so on are exemplified. These ultraviolet absorbing agents may be used alone or in combination of at least two of them. Among them, the benzotriazole-based ultraviolet absorbing agent, the malonic ester-based ultraviolet absorbing agent, and the oxalic anilide-based ultraviolet absorbing agent are preferable.

As to the benzophenone-based ultraviolet absorbing agent, examples thereof include 2,4-dihydroxybenzophenone, 2-hydroxy-4-methoxybenzophenone, 2-hydroxy-4-methoxybenzophenone-5-sulfonic acid, 2-hydroxy-4-octyloxybenzophenone, 4-dodecyloxy-2-hydroxybenzophenone, 4-benzyloxy-2-hydroxybenzophenone, and 2,2'-dihydroxy-4,4'-dimethoxybenzophenone.

As to the cyanoacrylate-based ultraviolet absorbing agent, examples thereof include ethyl 2-cyano-3,3-diphenylacrylate, and 2-ethylhexyl 2-cyano-3,3-diphenylacrylate.

As to the benzotriazole-based ultraviolet absorbing agent, examples thereof include 2-(2-hydroxy-5-methylphenyl)-2H-benzotriazole, 5-chloro-2-(3,5-di-tert-butyl-2-hydroxyphenyl)-2H-benzotriazole, 2-(3-tert-butyl-2-hydroxy-5-methylphenyl)-5-chloro-2H-benzotriazole, 2-(3,5-di-tert-pentyl-2-hydroxyphenyl)-2H-benzotriazole, 2-(3,5-di-tert-butyl-2-hydroxyphenyl)-2H-benzotriazole, 2-(2H-benzotriazole-2-yl)-4-methyl-6-(3,4,5,6-tetrahydrophthalimidylmethyl)phenol, and 2-(2-hydroxy-5-tert-octylphenyl)-2H-benzotriazole.

As to the malonic ester-based ultraviolet absorbing agent, 2-(1-aryl alkylidene)malonates are generally used, and examples thereof include dimethyl 2-(p-methoxybenzylidene)malonate.

As to the oxalic anilide-based ultraviolet absorbing agent, 2-alkoxy-2'-alkyloxalic anilides are generally used, and examples thereof include 2-ethoxy-2'-ethyloxalic anilide.

The amount of the ultraviolet absorbing agent which is used is preferably 5 to 1,000 ppm by weight with respect to a polymer contained in a polymer composition to be obtained.

In the raw material monomer tank 1, the raw material monomer (one kind or a mixture of two or more kinds) as described above is appropriately prepared (together with other component(s) such as the chain transfer agent as the case may be). In the polymerization initiator tank 3, the polymerization initiator as described above is appropriately prepared with the raw material monomer if necessary (together with other component(s) such as the chain transfer agent as the case may be). The polymerization initiator tank 3 may store the polymerization initiator alone or in the form of the mixture of the raw material monomer and the polymerization initiator (may further comprising other component(s) such as the chain transfer agent as the case may be). In a case of using the polymerization initiator tank 17, the polymerization initiator as described above is appropriately prepared in the polymerization initiator tank 17, with the raw material monomer if necessary (together with other component(s) such as the chain transfer agent as the case may be). The polymerization initiator tank 17 may store the polymerization initiator alone or in the form of the mixture of the raw material monomer and the polymerization initiator (may further comprise other component(s) such as the chain transfer agent as the case may be). However, in a case where the polymerization initiator tank 17 is connected to the supply port 21c via the pump 19, storing of the polymerization initiator alone may raise a concern of the polymerization reaction proceeding locally in the reactor 20 since the polymerization initiator is solely supplied to the reactor 20. On the contrary, storing in the form of the mixture of the raw material monomer and the polymerization initiator is able to solve such concern since the polymerization initiator is mixed with a part of the raw material monomer beforehand.

### • First polymerization Step

The raw material monomer and the polymerization initiator are supplied to the first reactor 10 through the supply port 11a from the raw material monomer tank 1 and the polymerization initiator tank 3 as the supply source of the raw material monomer and the polymerization initiator. More specifically, the raw material monomer is supplied from the raw material monomer tank 1 by the pump 5, and the polymerization initiator (preferably, the mixture of the raw material monomer and the polymerization initiator, which is also simply referred to as the polymerization initiator herein) is supplied from the polymerization initiator tank 3 by the pump 7, and they merge together through the raw material supply line 9 into the first reactor 10 via the supply port 11a. Also, the polymerization initiator may be supplied from the polymerization initiator tank 3 by the pump 7 to the first reactor 10 via the supply port 11c as shown by the dotted line in Fig. 1.

For supplying the polymerization initiator to the first reactor 10, when the mixture of the raw material monomer and the polymerization initiator is prepared in the polymerization initiator tank 3 and supplied therefrom, it is preferable to adjust a ratio A : B in a range from 80:20 to 98:2 wherein A represents the supply flow rate (kg/h) of the raw material monomer from the raw material monomer tank 1, and B represents the supply flow rate (kg/h) of the mixture of the raw material monomer and the polymerization initiator (with a content ratio of the polymerization initiator of 0.002 to 10% by weight) from the polymerization initiator tank 3.

The temperature of the raw material monomer and the polymerization initiator supplied to the first reactor 10 is not particularly limited. However, this is one of factors which may change the polymerization temperature by losing a heat balance in the reactor, and therefore it is preferable to adjust that temperature appropriately by a heater/cooler (not shown in the drawing) before the supply to the reactor 10.

The raw material monomer and the polymerization initiator supplied to the first reactor 10 as described above are subjected to continuous polymerization, e.g. continuous bulk polymerization in this embodiment (in other words, polymerization with no solvent), under an adiabatic condition (condition with substantially no heat transfer to or from outside of the reactor) in the first reactor 10. This first polymerization step has only to proceed the polymerization reaction partway, and an intermediate composition is taken from the effluent port 11b of the first reactor 10.

In the first polymerization step, the continuous polymerization is conducted under a condition in which the reactor is filled with the reaction mixture while substantially no gas phase is present (hereinafter referred to as a fully filled condition). This is especially suitable to the continuous bulk polymerization. The fully filled condition can prevent beforehand problems such as that gel adheres to and grows on the inner surface of the reactor, and that this gel is mixed into the reaction mixture and degrades the quality of a polymer composition obtained in the end. Further, the fully filled condition allows all of the inner volume of the reactor to be used as a reaction space, and thereby a high productivity can be attained.

Since the effluent port 11b of the first reactor 10 is located at the reactor's top, the fully filled condition can be conveniently achieved simply by conducting the supply to and the withdrawal from the first reactor 10, continuously.

Further in the first polymerization step, the continuous polymerization is conducted under the adiabatic condition. This is especially suitable for the continuous bulk polymerization. The adiabatic condition can prevent beforehand the problems such as that gel adheres to and grows on the inner surface of the reactor, and that this gel is mixed into the reaction mixture and degrades the quality of a polymer composition obtained in the end. Further, the adiabatic condition allows the polymerization reaction to become stable, and self regulating characteristics for suppressing a runaway reaction can be brought about.

The adiabatic condition can be achieved by making the temperature of the inside of the first reactor 10 and the temperature of the outer surface thereof generally equal to each other. More specifically, this can be realized, with the use of the above described control unit (not shown in the drawing), by adjusting the supply amounts of the raw material monomer and the polymerization initiator to the first reactor 10 with operating the pumps 5 and 7 such that the temperature of the outer surface of the first reactor 10 set for the jacket (temperature regulating means) 13 and the temperature in the first reactor 10 detected by the temperature sensor (temperature detecting means) T correspond to each other. It is not preferable to set the temperature of the outer surface of the reactor much higher than the temperature in the reactor since it adds extra amount of heat into the reactor. The smaller the difference between the temperature in the reactor and the temperature of the outer surface of the reactor is, the better it is. More specifically, it is preferable to adjust the temperature difference within the range of ± 5 °C.

The heat generated in the first reactor 10 such as polymerization heat and stirring heat is generally carried away on taking the intermediate composition from the first reactor 10. The amount of the heat carried away by the intermediate composition is determined by the flow rate and the specific heat of the intermediate composition, and the temperature of the polymerization reaction.

The temperature of the continuous polymerization in the first polymerization step is understood as the temperature in the first reactor 10 (detected by the temperature sensor T). The first polymerization step is conducted at a temperature from 125 to 170 °C, more preferably at a temperature from 125 to 160 °C. It is noted, however, that the temperature in the reactor may change according to various conditions until it reaches a static state.

The pressure of the continuous polymerization in the first polymerization step is understood as the pressure in the first reactor 10. This pressure is typically a pressure not less than a vapor pressure of the raw material monomer at the temperature in the reactor to prevent gas of the raw material monomer from generating in the reactor, and is generally about 1.0 to 2.0 MPa in gauge pressure.

The time period of the continuous polymerization in the first polymerization step is understood as the average residence time in the first reactor 10. The average residence time in the first reactor 10 can be set according to the productivity of the polymer in the intermediate composition and so on, and is not particularly limited. For example, it can be from 15 minutes to 6 hours. The average residence time in the first reactor 10 can be adjusted by using the pumps 5 and 7 to change the supply amount (supply flow rate) of the raw material monomer to the first reactor 10. However, since the average residence time depends in a large part on the inner volume of the first reactor 10, how the inner volume of the first reactor 10 and the inner volume of the second reactor 20 are designed may also become important as hereinafter described.

As described above, the intermediate composition is taken from the effluent port 11b of the first reactor 10. The obtained intermediate composition comprises the generated polymer and the unreacted raw material monomer, and may further comprise the unreacted polymerization initiator, decomposed substance of the polymerization initiator.

Although this embodiment is not limited thereto, the polymerization rate in the intermediate composition is, for example, 5 to 80% by weight. The polymerization rate in the intermediate composition generally corresponds to the content ratio of the polymer in the intermediate composition.

### • Second polymerization Step

The second polymerization step is conducted in series with and following to the first polymerization step.

After the intermediate composition obtained as described in the above is taken from the effluent port 11b of the first reactor, it is supplied to the second reactor 20 from the supply port 21a through the connection line 15. Then, the intermediate composition is further subjected to continuous polymerization, e.g. continuous bulk polymerization in this embodiment, under an adiabatic condition in the second reactor 20. This second polymerization step is to let the polymerization reaction proceed to the desired polymerization rate, and a polymer composition (or polymerization syrup) is taken from the effluent port 21b of the second reactor 20.

Hereinafter, the second polymerization step will be described mainly with respect to points different from the first polymerization step, and explanations as provided for the first polymerization step apply similarly unless otherwise explained.

Although it is not necessary for this embodiment, the polymerization initiator tank 17 and the pump 19 may be used, if necessary. In case of using the polymerization initiator tank 17 and the pump 19, the additional (or fresh) polymerization initiator (preferably, the mixture of the raw material monomer and the polymerization initiator) is supplied from the polymerization initiator tank 17 by the pump 19 through the connection line 15 to the second reactor 20 via the supply port 21a or the another supply port 21c, and thereby the intermediate composition is added with the additional polymerization initiator. The temperature of the polymerization initiator supplied to the second reactor 20 from the polymerization initiator tank 17 is not particularly limited. However, this is one of factors which may change in the polymerization temperature by losing the heat balance in the reactor, and therefore it is preferable to adjust that temperature appropriately by a heater/cooler (not shown in the drawing) before the supply to the reactor 20.

Also it is preferable to conduct the continuous polymerization so that the temperature of the connection line 15 is substantially the same temperature as the temperature in the first reactor 10. If it is avoided that the temperature of the connection line 15 is too low compared to the temperature in the first reactor 10, the viscosity of the intermediate composition in the connection line 15 can be prevented from increasing, so that the intermediate composition can be stably supplied to the second reactor 20. If it is avoided that the temperature of the connection line 15 is too high compared to the temperature in the first reactor 10, the temperature in the second reactor is prevented from increasing, so that qualities such as heat stability of the resin composition to be obtained can be maintained. In order to adjust the temperature of the connection line 15 to substantially the same temperature as the temperature in the first reactor 10, the connection line 15 can be provided with the jacket as the temperature regulating means to adjust the setting temperature of the jacket. When polymerization heat is not generated in the connection line, the temperature of the connection line 15 can be adjusted to substantially the same temperature as the temperature in the first reactor 10 by providing the connection line 15 with a lagging, in place of the jacket, to retain its heat (or to thermally insulate it from the outside).

For supplying the polymerization initiator to the second reactor 20, when the mixture of the raw material monomer and the polymerization initiator is prepared in the polymerization initiator tanks 3 and 17 and supplied therefrom, it is preferable to adjust a ratio A : (B₁ + B₂) in a range from 80:20 to 98:2 and a ratio B₁ : B₂ in a range from 10:90 to 90:10 wherein A represents the supply flow rate (kg/h) of the raw material monomer from the raw material monomer tank 1, B₁ represents the supply flow rate (kg/h) of the mixture of the raw material monomer and the polymerization initiator (with a content ratio of the polymerization initiator of 0.002 to 10% by weight) from the polymerization initiator tank 3, and B₂ represents a supply flow rate (kg/h) of the mixture of the raw material monomer and the polymerization initiator (with a content ratio of the polymerization initiator of 0.002 to 10% by weight) from the polymerization initiator tank 17.

Also in the second polymerization step, the continuous polymerization is conducted under a fully filled condition. This is especially suitable for the continuous bulk polymerization. The fully filled condition can prevent beforehand problems such as that gel adheres to and grows on the inner surface of the reactor, and that this gel is mixed into the reaction mixture and degrades the quality of the polymer composition obtained in the end. Further, the fully filled condition allows all of the inner volume of the reactor to be used as a reaction space, and thereby a high productivity can be attained.

Since the effluent port 21b of the second reactor 20 is located at the reactor's top, the fully filled condition can be conveniently achieved simply by conducting the supply to and the withdrawal from the second reactor 20, continuously.

Also, further in the second polymerization step, the continuous polymerization is conducted under the adiabatic condition. This is especially suitable for the continuous bulk polymerization. The adiabatic condition can prevent beforehand problems such as that gel adheres to and grows on the inner surface of the reactor, and that this gel is mixed into the reaction mixture and degrades the quality of the polymer composition obtained in the end. Further, the adiabatic condition allows the polymerization reaction to become stable, and self regulating characteristics for suppressing a runaway reaction can be brought about.

The adiabatic condition can be achieved by making the temperature of the inside of the second reactor 20 and the temperature of the outer surface thereof generally equal to each other. More specifically, this can be realized, with the use of the above described control unit (not shown in the drawing), by adjusting the supply amounts of the raw material monomer and the polymerization initiator to the second reactor 20 with operating the pumps 5 and 7 and, if present, the pump 19 such that the temperature of the outer surface of the second reactor 20 set for the jacket (temperature regulating means) 23 and the temperature in the second reactor 20 detected by the temperature sensor (temperature detecting means) T correspond to each other. It is not preferable to set the temperature of the outer surface of the reactor much higher than the temperature in the reactor since it adds extra amount of heat into the reactor. The smaller the difference between the temperature in the reactor and the temperature of the outer surface of the reactor is, the better it is. More specifically, it is preferable to adjust the temperature difference within the range of ± 5 °C.

The heat generated in the second reactor 20 such as polymerization heat and stirring heat is generally carried away on taking the polymer composition from the second reactor 20. The amount of the heat carried away by the polymer composition is determined by the flow rate and the specific heat of the polymer composition, and the temperature of the polymerization reaction.

The temperature of the continuous polymerization in the second polymerization step is understood as the temperature in the second reactor 20. The second polymerization step is conducted at a temperature from 130 to 180 °C, more preferably at a temperature from 140 to 180 °C. Since the continuous polymerization is conducted under adiabatic condition in the second polymerization step, the polymerization heat generated by the polymerization reaction makes the temperature at the second polymerization step higher than the temperature at the first polymerization step. If it is avoided that the temperature of the second polymerization step is too low, the polymerization rate in the second polymerization step and therefore the productivity can be prevented from being significantly decreased. Thus, the polymer composition can be efficiently produced without requiring a larger reactor and installation for recovering the monomer. If it is avoided that the temperature of the second polymerization step is too high, the syndiotacticity of the obtained polymer can be prevented from being lowered, and therefore heat resistance of a resin composition obtained in the end is prevented from being lowered. Also, if it is avoided that the temperature of the second polymerization step is too high, the polymerization initiator can be prevented from being readily decomposed. This eliminates a necessity of a higher amount of the polymerization initiator, which can be used to compensate for drop in the polymerization efficiency, and therefore the heat stability of the resin composition obtained in the end is prevented from being lowered.

The pressure of the continuous polymerization in the second polymerization step is understood as the pressure in the second reactor 20. This pressure is generally about 1.0 to 2.0 MPa in gauge pressure, and may be equal to the pressure in the first polymerization step.

The time period of the continuous polymerization in the second polymerization step is understood as the average residence time in the second reactor 20. The average residence time in the second reactor 20 can be set according to the productivity of the polymer in the polymer composition and so on, and is not particularly limited. For example, it can be from 15 minutes to 6 hours. A ratio of the average residence time in the second reactor 20 to the average residence time in the first reactor 10 is preferably from 9/1 to 1/9, and more preferably from 8/2 to 2/8. The average residence time in the second polymerization step may be equal to the average residence time in the first polymerization step, but is preferably different from it. The average residence time in the second reactor 20 can be adjusted by using the pumps 5 and 7 and, if present, the pump 19 to change the supply amount (supply flow rate) of the raw material monomer or the like to the second reactor 20. However, since the average residence time depends in a large part on the inner volume of the second reactor 20, how the inner volume of the first reactor 10 and the inner volume of the second reactor 20 are designed may become important as hereinafter described.

As described above, the polymer composition can be taken from the effluent port 21b of the second reactor 20. The obtained polymer composition comprises the generated polymer, and may further comprise unreacted raw material monomer, unreacted polymerization initiator, decomposed substance of the polymerization initiator, and so on.

Although this embodiment is not limited thereto, the polymerization rate in the polymer composition is, for example, 30 to 90% by weight. The polymerization rate in the polymer composition generally corresponds to the content ratio of the polymer in the polymer composition. The higher the polymerization rate, the higher the productivity of the polymer, but also the higher the viscosity of the composition from intermediate composition to the polymer composition, resulting in larger necessary power for stirring. The lower the polymerization rate, the lower the productivity of the polymer, resulting in larger load for recovering the unreacted raw material monomer. Therefore, it is preferable to set an appropriate polymerization rate as a target or a guide.

According to this embodiment, the first polymerization step is conducted at the temperature from 125 to 170°C, and the second polymerization step is conducted at the temperature from 130 to 180°C, and thereby it becomes possible to produce the polymer composition having high heat stability, with high productivity.

Furthermore, according to this embodiment, the ratio of an average residence time in the second reactor 20 to the average residence time in the first reactor 10 is preferably from 9/1 to 1/9, and thereby it becomes possible to produce the polymer composition having high heat stability, with high productivity.

In general, the following tendency is observed: the higher the polymerization temperature, the lower the syndiotacticity of the obtained polymer, and the lower the heat resistance of a resin composition obtained in the end. Also, the following tendency is observed: the higher the amount of the polymerization initiator decomposed, the lower the polymerization efficiency, the higher the amount of the polymerization initiator necessary to compensate for the polymerization efficiency, and as a result, the lower the heat stability of the resin composition obtained in the end. If the residence time becomes longer, the necessary amount of the polymerization initiator becomes small, so that the lowering of the heat stability can be prevented. However, this is not effective since it requires a larger reactor. Thus, it is more preferable to conduct the polymerization at a lower temperature in view of obtaining a resin composition having higher heat resistance and heat stability. However, if continuous polymerization is conducted in one stage only at a lower temperature with the use of the conventional continuous polymerization apparatus (JP 07-126308 A and JP 2006-104282 A), it brings about a lower polymerization rate and a significantly lower productivity for retaining the adiabatic condition. Therefore, in order to assure the high productivity, it requires a larger reactor and installation for recovering the monomer, so that it is not efficient.

In contrast, by conducting the continuous polymerization in two stages as in this invention, the polymerization reaction conditions, more specifically, the temperature, the time period (average residence time), the amount of the polymerization initiator (the ratio of the polymerization initiator to the raw material monomer) and so on can be set for the first polymerization step and the second polymerization step, independently.

For example, it is possible in this invention to conduct the continuous polymerization in the first polymerization step at a relatively lower temperature and then to further conduct the continuous polymerization in the second polymerization step at a relatively higher temperature. More specifically, the first polymerization step is conducted at the temperature from 125 to 170°C, and the second polymerization step is conducted at the temperature from 130 to 180°C. Thereby it becomes possible to obtain a higher polymerization rate in the second polymerization step and a higher productivity compared with a case of conducting continuous polymerization in only a single stage at a lower temperature, and to obtain a resin composition having higher heat stability and heat resistance compared with a case of conducting continuous polymerization in only a single stage at a higher temperature. Furthermore, compared with a case of conducting the first polymerization step of the two stage continuous polymerization at a temperature less than 125°C, it becomes possible to reduce the amount of the polymerization initiator used in total for accomplishing a desired polymerization rate and thus to obtain a resin composition having higher heat stability.

How the polymerization reaction conditions are set for each of the first polymerization step and the second polymerization step may vary according to the polymer generated, the raw material monomer and the polymerization initiator used, the heat resistance, heat stability and productivity desired, and so on.

### • Devolatilization Step

As described above, the polymer composition (polymerization syrup) taken from the effluent port 21b of the second reactor 20 may comprise the unreacted raw material monomer and polymerization initiator and so on, in addition to the generated polymer. Although this embodiment is not limited thereto, such a polymer composition is preferably subjected to, for example, devolatilization to separate and recover the raw material monomer.

More specifically, the polymer composition can be transferred to the preheater 31 through the effluent line 25. The polymer composition in the preheater 31 is supplied with a part or all of the amount of heat necessary to volatilize the volatile component which is mainly composed of the unreacted raw material monomer. Then, the polymer composition can be transferred to the devolatilizing extruder 33 via the pressure adjusting valve (not shown in the drawing), and the volatile component is at least partially removed in the devolatilizing extruder, and a residual extruded object is formed into pellets and discharged from the discharge line 35. Thereby, e.g. the resin composition comprising a methacrylic ester polymer is produced in the form of the pellets.

As a method for transferring the above polymer composition, a method described in JP 4-48802 B is preferable. As a method of using a devolatilizing extrude, methods described in, for example, JP 3-49925 A, JP 51-29914 B, JP 52-17555 B, JP 1-53682 B, JP 62-89710 A and so on are preferable.

Further, during or after devolatilization of the polymer composition in the devolatilizing extruder described above, the polymer composition or the extruded object can be added with a mold release agent such as higher alcohols and higher fatty acid esters, an ultraviolet absorbing agent, a heat stabilizing agent, a colorant, and an antistatic agent, in order to incorporate them into the resin composition, if necessary.

The volatile component removed in the devolatilizing extruder 33 consists primarily of the unreacted raw material monomer and includes impurities; e.g. impurities originally contained in the raw material monomer, additives used if necessary, volatile by-product(s) generated in the process of polymerization, oligomers such as dimers and trimers, decomposed substances of the polymerization initiator. In general, a larger amount of the impurities make the obtained resin composition colored, which is not preferable. Then, the volatile component removed in the devolatilizing extruder 33 (which consists primarily of the unreacted raw material monomer and includes impurities as described above) may be passed through a monomer recovery column (not shown in the drawing), and treated by means of distillation, adsorption and so on in the monomer recovery column to remove the impurities from the above described volatile component. Thereby, the unreacted raw material monomer can be recovered with high purity, so that it can be suitably reused as the raw material monomer for polymerization. For example, continuous distillation is conducted in the monomer recovery column to recover the unreacted raw material monomer with high purity as a distillate liquid from the top of the monomer recovery column, and it may be transferred and recycled to the raw material monomer tank 1 after it is reserved in the recovery tank 37 once, or it may be transferred and recycled to the raw material monomer tank 1 without being reserved in the recovery tank 37. On the other hand, the impurities removed in the monomer recovery column may be disposed as a waste.

In order to prevent the recovered raw material monomer from causing the polymerization reaction in the recovery tank 37 and/or the raw material monomer tank 1, it is preferable that a polymerization inhibitor exists in the recovery tank 37 or the raw material monomer tank 1 at a ratio of, for example, 2 to 8 ppm by weight with respect to the raw material monomer, and more preferably, in addition to this, an oxygen concentration in the gas phase in the recovery tank 37 or the raw material monomer tank 1 is set at 2 to 8% by volume. If the recovered raw material monomer is wanted to be preserved in the recovery tank 37 for a long time, it is preferable to reserve it at a low temperature of, for example, 0 to 5°C.

In this embodiment, the continuous bulk polymerization apparatus wherein the first reactor and the second reactor are both used to conduct the continuous bulk polymerization is described. However, the continuous polymerization apparatus of the present invention is not limited thereto, one or both of the first reactor and the second reactor may be used to conduct continuous solution polymerization. In such embodiment, since a solvent is used for the solution polymerization, the continuous polymerization apparatus is provided, in addition to a similar configuration to the continuous polymerization apparatus described above with reference to Fig. 1, with a solvent tank and a supply line and a pump (supply means) associated with the solvent tank to supply the solvent to a certain reactor for conducting the solution polymerization. The solvent tank and the supply line and the pump (supply means) associated with the solvent tank are not particularly limited, those similar to conventionally used ones can be used. The solvent can be supplied to the certain reactor for conducting the solution polymerization after being mixed with raw material monomer and/or the polymerization initiator, or can be supplied to the certain reactor for conducting the solution polymerization, directly. In the above certain reactor, the polymerization step is conducted similarly (under an adiabatic condition) to the polymerization step described above with reference to Fig. 1, except that the solvent is used in the polymerization reaction. As to the solvent, it is appropriately selected according to the raw material monomer of the solution polymerization reaction and so on, and not particularly limited, but examples thereof include toluene, xylene, ethyl benzene, methyl isobutyl ketone, methyl alcohol, ethyl alcohol, octane, decane, cyclohexane, decalin, butyl acetate, and pentyl acetate. A ratio C : D is, for example, 70:30 to 95:5, and preferably 80:20 to 90:10, but not limited thereto, wherein C represents a supply flow rate (kg/h) of the raw material monomer to the certain reactor for conducting the solution polymerization, and D represents a supply flow rate (kg/h) of the solvent to this certain reactor.

The process for producing the polymer composition of the present invention is hereinbefore described through the embodiments of the present invention in detail. According to the present invention, the polymerization can be conducted in at least two stages in series by using at least the first reactor and the second reactor. Thus, the polymerization reaction conditions, more specifically, the temperature, the time period (average residence time), the amount of the polymerization initiator (the ratio of the polymerization initiator to the raw material monomer) and so on can be set for the first polymerization step and the second polymerization step, independently. The first polymerization step is conducted at the temperature from 125 to 170°C ,and the second polymerization step is conducted at the temperature from 130 to 180°. Thereby, it becomes possible to control syndiotacticity of the polymer contained in the resin composition obtained in the end, and to produce more efficiently the polymer composition which is suitable for obtaining a resin composition having high heat resistance and heat stability.

However, the present invention is not limited to the above embodiments, and various modifications can be made. For example, three or more reactors can be used to conduct the polymerization in three or more stages in series. Further, the process for producing the polymer composition of the present invention is conducted continuously, but it may be conducted in a batch method.

The polymer composition produced by the process of the present invention is preferably used as a material for a molded article, and the molded article obtained therefrom has an advantage of showing high heat resistance and heat stability. For example, the polymer composition produced by the process of the present invention (more specifically, the resin composition after devolatilization; is molded alone or together with any suitable other component(s) according to any molding process such as injection molding and extrusion molding to prepare a molded article. The polymer composition produced by the process of the present invention is preferably used for preparing a molded article by injection molding, and it is possible to prepare a molded article with good moldability and prevent silver streaks from occurring. Especially, since a resin composition comprising a methacrylic ester based polymer has a superior transparency, the molded article prepared from it by injection molding has high transparency and less occurrence of silver streaks and good moldability, and therefore it is preferably utilized as a material for a light guide plate, which is used as a member of a backlight unit for various types of liquid crystal displays, or for vehicle members such as a rear lamp cover, a head lamp cover, a visor, and a meter panel.

Injection molding can be conducted by filling (injecting into) a mold having a certain thickness with at least the polymer composition produced by the process of the present invention in a molten state, followed by cooling. Then, the thus molded article is released from the mold. More specifically, the molded article can be prepared by, for example, supplying a molding machine from a hopper with the polymer composition produced by the process of the present invention (more specifically, the resin composition after devolatilization) alone or in combination with any other suitable components, retracting and rotating a screw to measure the resin composition in a cylinder of the molding machine, melting the resin composition in the cylinder, filling a mold (e.g. metal mold) with the molten resin composition under pressure, holding the pressure for a certain time period until the mold is sufficiently cooled, opening the mold to eject the molded article therefrom.

Thus, according to another aspect of the present invention, there is also provided a molded article prepared from the polymer composition produced by the process of the present invention. It is noted that conditions for preparing the molded article of the present invention from the polymer composition (for example, in a case of injection molding, the temperature for melting a molding material, the temperature of the mold to which the molding material is injected, the pressure to be held after the mold is filled with the molding material) can be appropriately set and are not specifically limited.

### Examples

Examples of the process for producing a polymer composition of the present invention are shown below, though the present invention is not limited to these examples.

### (Example 1)

In this example, generally, continuous polymerization was conducted in two stages according to the embodiment described above with reference to Fig. 1 to produce a polymer composition in the form of pellets (resin composition). More specifically, this was as explained below.

A raw material monomer mixed liquid 1 was prepared by mixing 98.606 parts by mass of methyl methacrylate and 0.987 part by mass of methyl acrylate together, and adding thereto 0.284 part by mass of n-octyl mercaptan as a chain transfer agent, and 0.123 part by mass of stearyl alcohol as a mold release agent.

A polymerization initiator mixed liquid 1 was prepared by mixing 99.820 parts by mass of methyl methacrylate, and 0.180 part by mass of t-amyl peroxy-2-ethylhexanoate as a polymerization initiator.

A polymerization initiator mixed liquid 2 was prepared by mixing 99.840 parts by mass of methyl methacrylate, and 0.160 part by mass of 1,1-di(t-butylperoxy)cyclohexane as a polymerization initiator.

For producing a polymer composition in this example, the apparatus shown in Fig. 1 was used. A reactor of a complete mixing type having a capacity of 13 liters was used as the first reactor 10, and a reactor of a complete mixing type having a capacity of 6 liters was used as the second reactor 20. The raw material monomer mixed liquid 1, the polymerization initiator mixed liquid 1, and the polymerization initiator mixed liquid 2 as prepared above were charged to the raw material monomer tank 1, the polymerization initiator tank 3, and the polymerization initiator tank 17, respectively.

The raw material monomer mixed liquid 1 and the polymerization initiator mixed liquid 1 flowed through the raw material supply line 9 respectively from the raw material monomer tank 1 and the polymerization initiator tank 3, and were supplied continuously to the first reactor 10 through the supply port 11a located at its lower part.

The supply of the raw material monomer mixed liquid 1 and the polymerization initiator mixed liquid 1 to the first reactor 10 was conducted so that their ratio of flow rates was 19.2:1 and an average residence time in the first reactor 10 was 64 minutes. The temperature in the first reactor 10 was 130°C, and the temperature of the jacket 13 surrounding the outer surface of the first reactor 10 was 130°C, so that the continuous polymerization was conducted under an adiabatic condition with substantially no heat transfer. This continuous polymerization was conducted under a condition in which the first reactor 10 was filled with a reaction mixture (mixed liquid) and substantially no gas phase was present (fully filled condition).

The reaction mixture in the first reactor 10 was continuously taken out as an intermediate composition from the effluent port 11b located on the top of the first reactor 10. The intermediate composition thus taken out was continuously flowed through the connection line 15 and supplied to the second reactor 20 through the supply port 21a located at its lower part. The connection line 15 was provided with the jacket surrounding its outer surface. This jacket was used to be controlled so that the intermediate composition flowing through the inside of the connection line 15 was maintained at a temperature equal to the temperature in the first reactor (130°C in this example). In addition, the polymerization initiator mixed liquid 2 was continuously supplied from the polymerization initiator tank 17 to the second reactor 20 through the other supply port 21c.

The supply of the intermediate composition and the polymerization initiator mixed liquid 2 to the second reactor 20 was conducted so that their ratio of flow rates was 24.7:1. An average residence time in the second reactor 20 was 26 minutes. The temperature in the second reactor 20 was 175°C, and the temperature of the jacket 23 surrounding the outer surface of the second reactor 20 was 175°C, so that the continuous polymerization was conducted under an adiabatic condition with substantially no heat transfer. This continuous polymerization was conducted under a condition in which the second reactor 20 was filled with a reaction mixture (mixed liquid) and substantially no gas phase was present (fully filled condition).

The reaction mixture in the second reactor 20 was continuously taken out as a polymer composition from the effluent port 21b located on the top of the second reactor 20. The polymer composition thus obtained was continuously flowed the effluent line 25 and heated in the preheater 31 to 200°C, and the volatile component such as the unreacted raw material monomer was separated therefrom at 240°C by the devolatilizing extruder 33 equipped with a vent. The resin composition obtained after devolatilization was extruded in a molten state, cooled with water, and then cut into pellets which were discharged from the discharge line 35. Thus, the resin composition was produced in the form of pellets.

The polymerization rate (wt%) was determined from the supply weights per hour of the raw material monomer mixed liquid 1, the polymerization initiator mixed liquid 1, and the polymerization initiator mixed liquid 2, and the production (discharge) weight per hour of the pellets. Further, with respect to the produced pellets, heat stability (wt%) and heat resistance (°C) were evaluated, and reduced viscosity (cm³/g) was measured as explained below. Results are shown in Table 1.

### <Heat stability>

Using a TG-DTA apparatus ("TG/DTA 6300" produced by Seiko Instruments Inc.), the pellets produced in the above were subjected to temperature rising from 50°C to 500°C with a rising temperature rate of 2°C/min under nitrogen flow of 200 mL/min, and change in its weight was measured.

On the basis of the weight of the pellets at the point of 50°C, a weight loss therefrom was determined. Assuming that the rate of the weight loss was 100 wt% at the point of 500°C, a rate of the weight loss (wt%) from 260 to 300°C was calculated.

The rate of the weight loss (wt%) from 260 to 300°C represents heat stability, showing that the smaller its value, the lesser occurrence of thermal degradation starting from an unsaturated end, i.e. the better the heat stability.

### <Heat resistance>

Using a DSC apparatus ("DSC6200" produced by Seiko Instruments Inc.), according to the differential scanning calorimetry method provided in JIS K 7121, the pellets produced in the above were subjected to temperature rising to 150°C with a rising temperature rate of 20°C/min under nitrogen flow of 100 mL/min and held for 5 minutes, and then subjected to temperature reduction to -50°C with a falling temperature rate of 20°C/min and held for one minute. Then, they were subjected to temperature rising from -50°C to 215°C with a rising temperature rate of 10°C/min, and a mid-point glass transition temperature (T_{mg}) was determined. It shows that the larger its value, the higher the heat resistance.

### <Reduced viscosity>

In conformity with ISO 1628-6, 0.5g of the pellets produced in the above was dissolved in chloroform to prepare a solution of 50 cm³, its viscosity was determined by Cannon-Fenske viscometer at 25°C.

### (Example 2)

In this example, a polymer composition was produced in the form of pellets similarly to Example 1, except for the following.

The polymerization initiator mixed liquid 1 was prepared by mixing 99.790 parts by mass of methyl methacrylate, and 0.210 part by mass of t-amyl peroxy-2-ethylhexanoate as polymerization initiator.

The polymerization initiator mixed liquid 2 was prepared by mixing 99.860 parts by mass of methyl methacrylate, and 0.140 part by mass of 1, 1-di(t-butylperoxy)cyclohexane as polymerization initiator.

The temperature in the first reactor 10 was 140°C, and the temperature of the jacket 13 surrounding the outer surface of the first reactor 10 was 140°C, so that the continuous polymerization was conducted under an adiabatic condition with substantially no heat transfer. Further, the jacket formed on the connection line 15 was used to be controlled so that the intermediate composition flowing through the inside of the connection line 15 was maintained at a temperature of 140°C.

As with Example 1, the polymerization rate (wt%) was determined from the supply weights per hour of the raw material monomer mixed liquid 1, the polymerization initiator mixed liquid 1, and the polymerization initiator mixed liquid 2, and the production (discharge) weight per hour of the pellets. Also as with Example 1, with respect to the produced pellets, heat stability (wt%) and heat resistance (°C) were evaluated, and reduced viscosity (cm³/g) was measured. Results are shown in Table 1.

### (Example 3)

In this example, a polymer composition was produced in the form of pellets similarly to Example 1, except for the following.

The polymerization initiator mixed liquid 1 was prepared by mixing 99.807 parts by mass of methyl methacrylate, and 0.193 part by mass of t-amyl peroxy-2-ethylhexanoate as polymerization initiator.

The polymerization initiator mixed liquid 2 was prepared by mixing 99.920 parts by mass of methyl methacrylate, and 0.080 part by mass of 1, 1-di(t-butylperoxy)cyclohexane as polymerization initiator.

The temperature in the first reactor 10 was 150°C, and the temperature of the jacket 13 surrounding the outer surface of the first reactor 10 was 150°C, so that the continuous polymerization was conducted under an adiabatic condition with substantially no heat transfer. Further, the jacket formed on the connection line 15 was used to be controlled so that the intermediate composition flowing through the inside of the connection line 15 was maintained at a temperature of 150°C.

As with Example 1, the polymerization rate (wt%) was determined from the supply weights per hour of the raw material monomer mixed liquid 1, the polymerization initiator mixed liquid 1, and the polymerization initiator mixed liquid 2, and the production (discharge) weight per hour of the pellets. Also as with Example 1, with respect to the produced pellets, heat stability (wt%) and heat resistance (°C) were evaluated, and reduced viscosity (cm³/g) was measured. Results are shown in Table 1.

### (Comparative Example 1)

In this comparative example, generally, continuous polymerization was conducted in one stage without using the polymerization initiator mixed liquid 2, differently from Example 1, to produce a polymer composition in the form of pellets. More specifically, this was as explained below.

Similarly to Example 1, a raw material monomer mixed liquid 1 was prepared by mixing 98.606 parts by mass of methyl methacrylate and 0.987 part by mass of methyl acrylate together, and adding thereto 0.284 part by mass of n-octyl mercaptan as a chain transfer agent, and 0.123 part by mass of stearyl alcohol as a mold release agent.

Differently from Example 1, a polymerization initiator mixed liquid 1 was prepared by mixing 99.779 parts by mass of methyl methacrylate, and 0.221 part by mass of 1,1-di(t-butylperoxy)cyclohexane as polymerization initiator.

For producing the polymer composition in this comparative example, the apparatus shown in Fig. 1 was used while being modified by omitting the second reactor 20 and the polymerization initiator tank 17 (and members related to them). A reactor of a complete mixing type having a capacity of 13 liters was used as the first reactor 10. The raw material monomer mixed liquid 1 and the polymerization initiator mixed liquid 1 as prepared above were charged to the raw material monomer tank 1 and the polymerization initiator tank 3, respectively.

The raw material monomer mixed liquid 1 and the polymerization initiator mixed liquid 1 flowed through the raw material supply line 9 respectively from the raw material monomer tank 1 and the polymerization initiator tank 3, and were supplied continuously to the first reactor 10 through the supply port 11a located at its lower part.

The supply of the raw material monomer mixed liquid 1 and the polymerization initiator mixed liquid 1 to the first reactor 10 was conducted so that their ratio of flow rates was 16.2:1 and an average residence time in the first reactor 10 was 64 minutes. The temperature in the first reactor 10 was 175°C, and the temperature of the jacket 13 surrounding the outer surface of the first reactor 10 was 175°C, so that the continuous polymerization was conducted under an adiabatic condition with substantially no heat transfer. This continuous polymerization was conducted under a condition in which the first reactor 10 was filled with the reaction mixture (mixed liquid) and substantially no gas phase was present (fully filled condition).

The reaction mixture in the first reactor 10 was continuously taken out as a polymer composition from the effluent port 11b located on the top of the first reactor 10. The polymer composition thus obtained was continuously flowed through the effluent line 25 (without being supplied to the second reactor 20) and heated in the preheater 31 to 200°C, and the volatile component such as the unreacted raw material monomer was separated therefrom at 240°C by the devolatilizing extruder 33 equipped with a vent. A polymer composition obtained after devolatilization was extruded in a molten state, cooled with water, and then cut into pellets which were discharged from the discharge line 35. Thus, the polymer composition was produced in the form of pellets.

The polymerization rate (wt%) was determined from the supply weights per hour of the raw material monomer mixed liquid 1 and the polymerization initiator mixed liquid 1, and the production (discharge) weight per hour of the pellets. Further, as with Example 1, with respect to the produced pellets, heat stability (wt%) and heat resistance (°C) were evaluated, and reduced viscosity (cm³/g) was measured. Results are shown in Table 1.

### (Comparative Example 2)

In this comparative example, a polymer composition was produced in the form of pellets similarly to Example 1, except for the followings.

The polymerization initiator mixed liquid 1 was prepared by mixing 99.799 parts by mass of methyl methacrylate, and 0.201 part by mass of t-amyl peroxy-2-ethylhexanoate as polymerization initiator.

The polymerization initiator mixed liquid 2 was prepared by mixing 99.780 parts by mass of methyl methacrylate, and 0.220 part by mass of 1,1-di(t-butylperoxy)cyclohexane as polymerization initiator.

The temperature in the first reactor 10 was 120°C, and the temperature of the jacket 13 surrounding the outer surface of the first reactor 10 was 120°C, so that the continuous polymerization was conducted under an adiabatic condition with substantially no heat transfer. Further, the jacket formed on the connection line 15 was used and controlled so that the intermediate composition flowing through the inside of the connection line 15 was maintained at a temperature of 120°C.

As with Example 1, the polymerization rate (wt%) was determined from the supply weights per hour of the raw material monomer mixed liquid 1, the polymerization initiator mixed liquid 1, and the polymerization initiator mixed liquid 2, and the production (discharge) weight per hour of the pellets. Also as with Example 1, with respect to the produced pellets, heat stability (wt%) and heat resistance (°C) were evaluated, and reduced viscosity (cm³/g) was measured. Results are shown in Table 1.

**Table 1**

| | First reactor | | Second reactor | | Polymeriza tion rate (wt%) | Reduced viscosity (cm³/g) | Heat stability (wt%) | Heat resistance T_{mg} (°C) |
|---|---|---|---|---|---|---|---|---|
| | Polymerization temp. (°C) | Residence time (min) | Polymerization temp. (°C) | Residence time (min) | | | | |
| Example 1 | 130 | 64 | 175 | 26 | 58 | 55.4 | 2.9 | 115 |
| Example 2 | 140 | 64 | 175 | 26 | 56 | 56.1 | 2.9 | 115 |
| Example 3 | 150 | 64 | 175 | 26 | 57 | 55.1 | 2.7 | 115 |
| Comparative example 1 | 175 | 64 | - | - | 61 | 53.7 | 3.1 | 113 |
| Comparative example 2 | 120 | 64 | 175 | 26 | 56 | 54.8 | 3.1 | 115 |

As will be understood from Table 1, Examples 1 to 3 produced a polymer composition (resin composition) showing a heat stability and a heat resistance better than those of Comparative example 1, while the polymerization rate was retained at an equal level and the reduced viscosity, which gives an indication of the molecular weight of the polymer, was retained at an equal level to that of Comparative example 1. Further, Examples 1 to 3 produced the polymer composition (resin composition) showing a heat stability better than that of Comparative example 2, though the polymerization rate, the reduced viscosity and the heat resistance were at an equal level to those of Comparative example 2.

### (Example 4)

In this example, generally, continuous polymerization was conducted in two stages according to the embodiment described above with reference to Fig. 1 to produce a polymer composition in the form of pellets (resin composition). Further, in order to evaluate their moldability, the produced pellets were molded into a molded article. More specifically, this will be explained below.

A raw material monomer mixed liquid 1 was prepared by mixing 93.0835 parts by mass of methyl methacrylate, 6.375 parts by mass of methyl acrylate and 0.076 part by mass of ethylene glycol dimethacrylate together, and adding thereto 0.322 part by mass of n-octyl mercaptan as a chain transfer agent, 0.121 part by mass of stearic monoglyceride and 0.013 part by mass of methyl stearate as mold release agents, 0.0005 part by mass of di-tert-dodecyl disulfide as a heat stabilizing agent, and 0.009 part by mass of dimethyl 2-(p-methoxybenzylidene)malonate as an ultraviolet absorbing agent.

A polymerization initiator mixed liquid 1 was prepared by mixing 99.752 parts by mass of methyl methacrylate, and 0.248 part by mass of t-amyl peroxy-2-ethylhexanoate as polymerization initiator.

A polymerization initiator mixed liquid 2 was prepared by mixing 99.280 parts by mass of methyl methacrylate and 9.6 parts by mass of methyl acrylate, and 0.120 part by mass of 1,1-di(t-butylperoxy)cyclohexane as polymerization initiator.

For producing the polymer composition in this example, the apparatus shown in Fig. 1 was used. A reactor of a complete mixing type having a capacity of 13 liters was used as the first reactor 10, and a reactor of a complete mixing type having a capacity of 6 liters was used as the second reactor 20. The raw material monomer mixed liquid 1, the polymerization initiator mixed liquid 1, and the polymerization initiator mixed liquid 2 as prepared above were charged to the raw material monomer tank 1, the polymerization initiator tank 3, and the polymerization initiator tank 17, respectively.

The raw material monomer mixed liquid 1 and the polymerization initiator mixed liquid 1 were flowed through the raw material supply line 9 respectively from the raw material monomer tank 1 and the polymerization initiator tank 3, and were supplied continuously to the first reactor 10 through the supply port 11a located at its lower part.

The supply of the raw material monomer mixed liquid 1 and the polymerization initiator mixed liquid 1 to the first reactor 10 was conducted so that their ratio of flow rates was 16.7:1 and an average residence time in the first reactor 10 was 46 minutes. The temperature in the first reactor 10 was 140°C, and the temperature of the jacket 13 surrounding the outer surface of the first reactor 10 was 140°C, so that the continuous polymerization was conducted under an adiabatic condition with substantially no heat transfer. This continuous polymerization was conducted under a condition in which the first reactor 10 was filled with a reaction mixture (mixed liquid) and substantially no gas phase was present (fully filled condition).

The reaction mixture in the first reactor 10 was continuously taken out as an intermediate composition from the effluent port 11b located on the top of the first reactor 10. The intermediate composition thus taken was continuously flowed the connection line 15 and supplied to the second reactor 20 through the supply port 21a located at its lower part. The connection line 15 was provided with the jacket surrounding its outer surface. This jacket was used and controlled so that the intermediate composition flowing through the inside of the connection line 15 was maintained at a temperature equal to the temperature in the first reactor (140°C in this example). In addition, the polymerization initiator mixed liquid 2 was continuously supplied from the polymerization initiator tank 17 to the second reactor 20 through the another supply port 21c.

The supply of the intermediate composition and the polymerization initiator mixed liquid 2 to the second reactor 20 was conducted so that their ratio of flow rates was 18.3:1. An average residence time in the second reactor 20 was 19 minutes. The temperature in the second reactor 20 was 175°C, and the temperature of the jacket 23 surrounding the outer surface of the second reactor 20 was 175°C, so that the continuous polymerization was conducted under an adiabatic condition with substantially no heat transfer. This continuous polymerization was conducted under a condition in which the second reactor 20 was filled with a reaction mixture (mixed liquid) and substantially no gas phase was present (fully filled condition).

The reaction mixture in the second reactor 20 was continuously taken out as a polymer composition from the effluent port 21b located on the top of the second reactor 20. The polymer composition thus obtained was continuously flowed the effluent line 25 and heated in the preheater 31 to 200°C, and the volatile component such as the unreacted raw material monomer was separated therefrom at 240°C by the devolatilizing extruder 33 equipped with a vent. The resin composition obtained after devolatilization was extruded in a molten state, cooled with water, and then cut into pellets which were discharged from the discharge line 35. Thus, the resin composition was produced in the form of pellets.

The polymerization rate (wt%) was determined from the supply weights per hour of the raw material monomer mixed liquid 1, the polymerization initiator mixed liquid 1, and the polymerization initiator mixed liquid 2, and the production (discharge) weight per hour of the pellets. Further, with respect to the produced pellets, MFR (melt mass flow rate) and moldability, were evaluated as explained below. Results are shown in Table 2.

### <MFR>

In conformity with JIS K 7210, with respect to the produced pellets, MFR was measured at 230°C under a load of 37.3 N.

### <Moldability>

The pellets produced in the above were supplied from a hopper to a molding machine set at a certain cylinder temperature, and injection molding was repeatedly conducted through the cylinder in this molding machine. Thereby molded articles were prepared in sequence. Conditions for the injection molding are shown below. After the cylinder temperature became stable, ten molded articles in sequence obtained by sequential ten shots (cycles) of injection molding were taken as samples, and silver streaks occurrence ratio was determined by counting samples showing occurrence of silver streaks among these ten samples. More specifically, the molded articles were subjected to visual observation, and occurrence of silver streaks was recognized when silver streaks were observed in the molded article. The silver streaks occurrence ratio was determined for three different cylinder temperatures according to similar procedures.

### Metal mold:

Rectangle of 23 cm x 30.5 cm (plane view), thickness of 0.8 mm

One fan gate (located on a longitudinal side of the rectangle in the plane)

### Gate width 304 mm

Molding machine:
   Electric servo drive injection molding machine ("J450ELIII-890H" produced by The Japan Steel Works, LTD.)
Cylinder temperature:
   300°C, 305°C, 310°C at a nozzle head temperature (molding temperature)
Hopper side temperature:
   220°C
Molding conditions:
   - Injection pressure: 179 MPa
   - Injection speed: 160 mm/sec
   - Metal mold temperature: 80°C
   - Injection time period: 0.4 sec
   - Back pressure: 15 MPa
   - Screw rotation speed: 45 rpm
   - Holding pressure: 45 MPa
   - Holding pressure time: 11 sec
Molding cycle:
   100 sec (including cooling time of 70 sec)
Residence time in cylinder:
   12 min

### (Comparative Example 3)

In this comparative example, generally, continuous polymerization was conducted in one stage without using the polymerization initiator mixed liquid 2, differently from Example 4, to produce a polymer composition in the form of pellets. Further, in order to evaluate its moldability, the produced pellets were molded into a molded article similarly to Example 4. More specifically, this was as explained below.

A raw material monomer mixed liquid 1 was prepared by mixing 95.0955 parts by mass of methyl methacrylate, 4.387 parts by mass of methyl acrylate and 0.076 part by mass of ethylene glycol dimethacrylate together, and adding thereto 0.298 part by mass of n-octyl mercaptan as a chain transfer agent, 0.121 part by mass of stearic monoglyceride and 0.013 part by mass of methyl stearate as mold release agents, 0.0005 part by mass of di-tert-dodecyl disulfide as a heat stabilizing agent, and 0.009 part by mass of dimethyl 2-(p-methoxybenzylidene)malonate as an ultraviolet absorbing agent.

A polymerization initiator mixed liquid 1 was prepared by mixing 99.767 parts by mass of methyl methacrylate, and 0.233 part by mass of 1,1-di(t-butylperoxy)cyclohexane as a polymerization initiator.

For producing the polymer composition in this comparative example, the apparatus shown in Fig. 1 was used while being modified by omitting the second reactor 20 and the polymerization initiator tank 17 (and members related to them). A reactor of a complete mixing type having a capacity of 13 liters was used as the first reactor 10. The raw material monomer mixed liquid 1 and the polymerization initiator mixed liquid 1 as prepared above were charged to the raw material monomer tank 1 and the polymerization initiator tank 3, respectively.

The raw material monomer mixed liquid 1 and the polymerization initiator mixed liquid 1 flowed through the raw material supply line 9 respectively from the raw material monomer tank 1 and the polymerization initiator tank 3, and were supplied continuously to the first reactor 10 through the supply port 11a located at its lower part.

The supply of the raw material monomer mixed liquid 1 and the polymerization initiator mixed liquid 1 to the first reactor 10 was conducted so that their ratio of flow rates was 16.7:1 and an average residence time in the first reactor 10 was 46 minutes. The temperature in the first reactor 10 was 175°C, and the temperature of the jacket 13 surrounding the outer surface of the first reactor 10 was 175°C, so that the continuous polymerization was conducted under an adiabatic condition with substantially no heat transfer. This continuous polymerization was conducted under a condition in which the first reactor 10 was filled with a reaction mixture (mixed liquid) and substantially no gas phase was present (fully filled condition).

The reaction mixture in the first reactor 10 was continuously taken out as a polymer composition from the effluent port 11b located on the top of the first reactor 10. The polymer composition thus obtained was continuously flowed the effluent line 25 (without supplied to the second reactor 20) and heated in the preheater 31 to 200°C, and the volatile component such as the unreacted raw material monomer was separated therefrom at 240°C by the devolatilizing extruder 33 equipped with a vent. The polymer composition obtained after devolatilization was extruded in a molten state, cooled with water, and then cut into pellets which were discharged from the discharge line 35. Thus, the polymer composition was produced in the form of pellets.

The polymerization rate (wt%) was determined from the supply weights per hour of the raw material monomer mixed liquid 1 and the polymerization initiator mixed liquid 1, and the production (discharge) weight per hour of the pellets. Further, as with Example 4, with respect to the produced pellets, MFR (melt mass flow rate) and moldability were evaluated. Results are shown in Table 2.

**Table 2**

| | First reactor | | Second reactor | | Poiymeriza tion rate (wt%) | MFR (g/10min) | Moldability (Silver streaks occurrence ratio) (%) | | |
|---|---|---|---|---|---|---|---|---|---|
| | Polymerization temp. (°C) | Residence time (min) | Polymerization temp. (°C) | Residence time (min) | | | 300°C | 305°C | 310°C |
| Example 4 | 140 | 46 | 175 | 19 | 57.5 | 11 | 0 | 0 | 30 |
| Comparative example 3 | 175 | 46 | - | - | 55.9 | 11 | 0 | 30 | 100 |

As will be understood from Table 2, Example 4 produced the polymer composition showing the better moldability (lower silver streaks occurrence ratio in the molded article) than that of Comparative example 3 even when molded at a higher temperature (molding temperature higher than 300°C, e.g. at 305°C or more), while the polymerization rate was retained at an equal level and the MFR, which may give an indication for determining the molding conditions, was retained at an equal level to those of Comparative Example 3.

The present invention can be used for producing a polymer composition which is suitable for obtaining a resin composition comprising a methacrylic ester polymer(s).

The present application claims priority to Japanese Patent Application No. 2011-59480 filed on March 17, 2011, entitled "PROCESS FOR PRODUCING POLYMER COMPOSITION." The contents of that application are incorporated herein by the reference thereto in their entirety.

## Claims

1. A process for producing a polymer composition, which comprises
a first polymerization step of supplying a raw material monomer and a polymerization initiator to a first reactor of a complete mixing type through its supply port to be subjected to continuous polymerization under an adiabatic condition in the first reactor of the complete mixing type, and taking a resultant intermediate composition from an effluent port located at the top of the first reactor of the complete mixing type; and
a second polymerization step of supplying the intermediate composition to a second reactor of a complete mixing type through its supply port to be further subjected to continuous polymerization under an adiabatic condition in the second reactor of the complete mixing type, and taking a resultant polymer composition from an effluent port located at the top of the second reactor of the complete mixing type;
wherein the first polymerization step is conducted at a temperature from 125 to 170°C, and the second polymerization step is conducted at a temperature from 130 to 180°C; and
wherein in the first polymerization step and in the second polymerization step, the continuous polymerization is conducted under a fully filled condition, wherein substantially no gas phase is present.

2. The process for producing the polymer composition according to claim 1, wherein the ratio of an average residence time in the second reactor of the complete mixing type to an average residence time in the first reactor of the complete mixing type is from 9/1 to 1/9.

3. The process for producing the polymer composition according to claim 1 or 2, wherein the continuous polymerization in the first polymerization step and the second polymerization step is continuous bulk polymerization.

## Patentansprüche

1. Ein Verfahren zur Herstellung einer Polymerzusammensetzung, das einen ersten Polymerisationsschritt des Zuführens eines Ausgangsmaterial-Monomers und eines Polymerisationsinitiators in einen ersten Mischreaktor durch seine Einlassöffnung, um sie im ersten Mischreaktor unter einer adiabatischen Bedingung kontinuierlicher Polymerisation auszusetzen, und des Entnehmens einer entstandenen Zwischenproduktzusammensetzung über eine Auslassöffnung, die sich oben am ersten Mischreaktor befindet; und
einen zweiten Polymerisationsschritt des Zugebens der Zwischenproduktzusammensetzung in einen zweiten Mischreaktor durch seine Einlassöffnung, um sie im zweiten Mischreaktor weiter unter einer adiabatischen Bedingung kontinuierlicher Polymerisation auszusetzen, und des Entnehmens einer entstandenen Polymerzusammensetzung über eine Auslassöffnung, die sich oben am zweiten Mischreaktor befindet, umfasst;
wobei der erste Polymerisationsschritt bei einer Temperatur von 125 bis 170 °C durchgeführt wird und der zweite Polymerisationsschritt bei einer Temperatur von 130 bis 180 °C durchgeführt wird; und
wobei im ersten Polymerisationsschritt und im zweiten Polymerisationsschritt die kontinuierliche Polymerisation unter einer Bedingung der vollständigen Füllung durchgeführt wird, wobei im Wesentlichen keine Gasphase vorhanden ist.

2. Das Verfahren zur Herstellung der Polymerzusammensetzung gemäß Anspruch 1, wobei das Verhältnis einer durchschnittlichen Verweildauer im zweiten Mischreaktor zu einer durchschnittlichen Verweildauer im ersten Mischreaktor 9/1 bis 1/9 beträgt.

3. Das Verfahren zur Herstellung der Polymerzusammensetzung gemäß Anspruch 1 oder 2, wobei die kontinuierliche Polymerisation im ersten Polymerisationsschritt und im zweiten Polymerisationsschritt kontinuierliche Massenpolymerisation ist.

## Revendications

1. Procédé pour la production d'une composition polymère, lequel comprend
une première étape de polymérisation consistant à introduire un monomère de matière première et un initiateur de polymérisation dans un premier réacteur d'un type mélange complet par l'intermédiaire de son orifice d'introduction pour les soumettre à une polymérisation continue dans une condition adiabatique dans le premier réacteur du type mélange complet, et à prélever une composition intermédiaire résultante à partir d'un orifice d'effluent disposé en haut du premier réacteur du type mélange complet ; et
une seconde étape de polymérisation consistant à introduire la composition intermédiaire dans un second réacteur d'un type mélange complet par l'intermédiaire de son orifice d'introduction pour la soumettre encore à une polymérisation continue dans une condition adiabatique dans le second réacteur du type mélange complet, et à prélever une composition polymère résultante à partir d'un orifice d'effluent disposé en haut du second réacteur du type mélange complet ;
dans lequel la première étape de polymérisation est réalisée à une température de 125 à 170°C, et la seconde étape de polymérisation est réalisée à une température de 130 à 180°C ; et
dans lequel dans la première étape de polymérisation et dans la seconde étape de polymérisation, la polymérisation continue est réalisée dans un état complètement rempli, dans lequel pratiquement aucune phase gazeuse n'est présente.

2. Procédé pour la production de la composition polymère selon la revendication 1, dans lequel le rapport d'un temps de séjour moyen dans le second réacteur du type mélange complet à un temps de séjour moyen dans le premier réacteur du type mélange complet est de 9/1 à 1/9.

3. Procédé pour la production de la composition polymère selon la revendication 1 ou 2, dans lequel la polymérisation continue dans la première étape de polymérisation et la seconde étape de polymérisation est une polymérisation continue en masse.
